(19) **Europäisches Patentamt**
**European Patent Office**
**Office européen des brevets**

(11) **EP 3 920 402 B1**

(12) **EUROPEAN PATENT SPECIFICATION**

(45) Date of publication and mention
of the grant of the patent:
**17.07.2024 Bulletin 2024/29**

(21) Application number: **19917463.2**

(22) Date of filing: **21.11.2019**

(51) International Patent Classification (IPC):
*H02P 21/00* (2016.01)      *H02P 21/22* (2016.01)
*H02M 7/48* (2007.01)

(52) Cooperative Patent Classification (CPC):
**H02P 21/0021; H02P 21/0025; H02P 21/22;
H02P 21/50; H02P 27/08**

(86) International application number:
**PCT/JP2019/045528**

(87) International publication number:
**WO 2020/174781 (03.09.2020 Gazette 2020/36)**

(54) **INVERTER CONTROL DEVICE AND CONTROL METHOD**

STEUERUNGSVORRICHTUNG UND STEUERUNGSVERFAHREN FÜR UMRICHTER

DISPOSITIF ET PROCÉDÉ DE COMMANDE D'ONDULEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2019 JP 2019031173**

(43) Date of publication of application:
**08.12.2021 Bulletin 2021/49**

(73) Proprietor: **Meidensha Corporation**
**Tokyo 141-6029 (JP)**

(72) Inventor: **HIROSE, Tsukasa**
**Tokyo 141-6029 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**JP-A- 2004 080 896      JP-A- 2004 080 896
JP-A- 2018 046 678      US-A1- 2018 367 076**

**Description**

**Technical Field**

This invention relates to a control device and a control method for an inverter which are configured to control and drive a motor, for example, to an art devised to improve an overall efficiency of the inverter and the motor.

**Background Art**

A control device for an inverter which is configured to control and drive a motor in accordance with a current command and so on according to one example is configured to determine and output a desired current command based on input parameters such as a rotation speed and a torque command of the motor by using a previously formed current command table.

The current command table is formed by performing a previous driving such as a test operation of the motor (the previous driving and so on by all driving conditions (the rotation speed, the torque command of the motor, and so on) permitted by the motor) while varying the input parameters inputted to the control device. In this previous driving, it is possible to derive the desired current command in consideration of an overall efficiency (= an inverter efficiency × a motor efficiency) at each input parameter.

However, in a case where the current command table is formed, for example, by setting the direct current power source voltage of the inverter to a predetermined fixed voltage (a rated voltage and so on), when the direct current power source voltage is varied in accordance with the load state of the motor, and so on (for example, varied to be smaller than the rated voltage), the current command according to this variation may not be outputted.

For example, in an on-vehicle inverter, the battery such as the accumulator is used as the direct current power source. In this case, the direct current power source voltage may be varied by the residual capacity in addition to the load state of the motor. In a case in which the current command according to the variation of the direct current power source voltage cannot be outputted, the driving control of the motor may not be performed in the desired manner, and the malfunction (the burning and so on) and so on may be caused.

Accordingly, a control device in a patent document JP2004080896A (hereinafter, referred to merely as a conventional control device) includes two current command tables formed by setting the direct current power source voltages of the inverter to two fixed voltages.

In this conventional control device, the two current command tables are appropriately employed, for example, in accordance with the detection voltage value of the direct current power source voltage. When the detection voltage value is between the two fixed voltages, the interpolation processing is performed to output the current command.

Moreover, a lower limit voltage of a normal voltage range of the direct current power source voltage (lower limit voltage in the range of the direct current power source voltage by which the normal driving can be performed by controlling and driving the motor, for example, when the residual capacity of the direct current power source is sufficient) is set to larger one of the two fixed voltages. Furthermore, a minimum voltage by which the driving control of the motor can be performed in the direct current power source voltage (minimum voltage by which the driving can be performed to put the safety first by controlling and driving the motor with the safety, for example, in a case where the residual capacity of the direct current power source voltage is decreased) is set to lower one of the two fixed voltages.

In this case, the efficiency of the inverter is easy to be the higher efficiency as the inverter output voltage and the direct current are closer to each other (for example, the modulation factor is closer to 1; hereinafter, referred to merely as the close state). Moreover, in a case where the current command is set to the constant value by correcting the final current command of the inverter driving control, with respect to the variation of the direct power source voltage, the driving control is performed to output the current command so that the inverter output voltage is set to the constant value.

US 2018/0367076 A1 further discloses an AC rotary machine controller for controlling an AC rotary machine via an inverter, wherein a DQ-axis current command calculation unit determines DQ-axis current command values based on a rotational speed ω of the AC rotary machine and a corrected torque command as well as the DC power voltage $V_{dc}$. In particular, the DQ-axis current command calculation unit switches and performs maximum torque/current control or voltage limiting control according to the operating point of the rotational speed ω and the torque command. During the maximum torque current control the dq-axis current command values are calculated which maximize a generated torque for the same current, wherein during the voltage limiting control an induced voltage generated in the windings of the AC rotary machine is maintained at the voltage limiting value.

**Summary of The Invention**

In the conventional control device, the lower limit voltage of the voltage range in which the direct current power source voltage is normal is varied in the driving condition of the motor (that is, varied in accordance with the input parameters). For example, the lower limit voltage of the voltage range tends to be biased to the lower voltage direction in a case in which the rotation speed and the torque command of the motor are low, relative to a case in which the rotation speed and the torque command is relatively high.

That is, in the conventional control device, even when the interpolation processing is not needed since the rotation speed and the torque command are relatively low (that is, when the uncontrollable circumstance of the motor, the malfunction (the burning and so on) and so on may not be caused), the interpolation processing is performed when the detection voltage value of the direct current power source voltage is between the two fixed voltages.

Moreover, in the current command table which generates the maximum torque, a predetermined current command is outputted in a case in which the rotation speed of the input parameter is in a relatively low region. The current command by which the inverter output voltage becomes constant is outputted in a case in which the rotation speed is in a relatively high region. However, a boundary between these outputs are different from each other in accordance with the direct current power source voltage.

Accordingly, in the interpolation processing, it may be difficult to be brought to the closer state. The inverter efficiency may be lowered. Accordingly, it is preferable that the interpolation processing having the high necessity is performed, and that the interpolation processing having the low necessity is not performed.

It is, therefore, an object of the present invention to provide an art devised to solve the above-described problems, to suppress so as not to perform the interpolation processing having the low necessity, and to improve the overall efficiency.

One aspect of the present invention includes a control section configured to derive d axis and q axis current commands in accordance with a rotation speed and a torque command of a motor controlled and driven by an inverter.

The control section of this control device includes; a voltage map section configured to output a comparative voltage value corresponding to the rotation speed and the torque command, a voltage comparison section configured to compare a comparative voltage value which is inputted from the voltage map section, and to which a voltage margin degree is multiplied, and a detection voltage value obtained by sensing a direct current power source voltage of the inverter, and a current command derivation section which has first and second current command tables, and which is configured to derive the d axis and q axis current commands based on the comparison result of the voltage comparison section.

The first current command table formed by the d axis and q axis current commands by which an overall efficiency is optimized to correspond to the rotation speed and the torque command when the motor is driven at a first arbitrary voltage in a controllable voltage range of the direct current power source voltage in which the inverter controls and drives the motor, the second current command table formed by the d axis and q axis current commands by which the overall efficiency is optimized to correspond to the rotation speed and the torque command when the motor is driven at a second arbitrary voltage smaller than the first voltage in the controllable voltage range, the comparative voltage value of the voltage map section which is a minimum voltage value necessary for the driving of the motor at each rotation speed and at each torque command in the controllable voltage range, and which is stored in the voltage map section to correspond to the rotation speed and the torque command.

The current command derivation section being configured to derive the d axis and q axis current commands corresponding to the rotation speed and the torque command in the first current command table when the detection voltage value is equal to or smaller than an upper limit value of the controllable voltage range, and equal to or greater than the comparative voltage value to which the voltage margin degree is multiplied, and to derive interpolated d axis and q axis current commands corresponding to the rotation speed and the torque command when the detection voltage value is equal to or greater than a lower limit value of the controllable voltage range, and smaller than the comparative voltage value to which the voltage margin degree is multiplied, and the interpolated d axis and q axis current commands derived by extracting the d axis and q axis current commands corresponding to the rotation speed and the torque command in the first and second current command tables, by performing a linear interpolation processing corresponding to the detection voltage value to the extracted d axis and q axis current commands.

The current command derivation section includes at least an intermediate current command table in addition to the first and second current command tables; the intermediate current command table is formed by the d axis and q axis current commands by which the overall efficiency is optimized to correspond to the rotation speed and the torque command when the motor is driven at an intermediate arbitrary voltage that is smaller than the first voltage, and greater than the second voltage; the interpolated d axis and q axis current commands corresponding to the rotation speed and the torque command are derived when the detection voltage value is equal to or greater than the lower limit value of the controllable voltage range, and smaller than the comparative voltage value to which the voltage margin degree is multiplied, and when the detection voltage value is between adjacent two of the first voltage, the second voltage, and the intermediate voltage; and the interpolated d axis and q axis current commands are derived by extracting the d axis and q axis current commands corresponding to the rotation speed and the torque command from the current command tables corresponding to the adjacent two voltages in the first and second current command tables and the intermediate current command table, from the current command tables corresponding to the two voltages, and by performing the linear interpolation processing corresponding to the detection voltage value to the extracted d axis and q axis current commands.

The first voltage is set to satisfy an equation (1), and the second voltage is set to the lower limit voltage of the controllable voltage range.

$$\text{The first voltage} = m \times (\text{the upper limit voltage of the controllable voltage range}) + n \times \text{the lower limit voltage of the controllable voltage range}) \tag{1}$$

where in the equation (1), m+n=1, 0<m≤1, 0≤n<1;

The driving of the motor includes a power running and a regeneration; the direct current power source stores the regenerative electric power by the regeneration of the motor; and m>n is satisfied in the equation (1).

Another aspect of the present invention is a control method which is configured to derive d axis and q axis current commands corresponding to a rotation speed and a torque command of a motor by a control section, and to control and drive the motor based on the derived d axis and q axis current commands. The control method is attained by the control configuration identical to that of the control device according to the one aspect.

In the present invention described above, it is possible to suppress so as not to perform the interpolation processing having lower necessity, and to improve the overall efficiency.

**Brief Description of Drawings**

FIG. 1 is a schematic configuration view for explaining one example of a control device 19 for an inverter according to this embodiment.

FIG. 2 is a schematic configuration view for explaining one example of a torque control section 1.

FIG. 3 is a current command value characteristic view with respect to the voltage variation, which shows the interpolation processing in a first embodiment.

FIG. 4 is a current command value characteristic view with respect to the voltage variation, which shows the interpolation processing in a second embodiment.

**Description of Embodiments**

A control device and a control method for an inverter according to one embodiment of the present invention is utterly different from a case in which an interpolation processing is performed merely when a detection voltage value is between two fixed voltage like a conventional device.

That is, this control device and so on for the inverter according to this embodiment employs a first and second current command table formed by d axis and q axis current commands in a case in which a motor is driven (driving to optimize an overall efficiency) by first and second arbitrary voltages (the first voltage > the second voltage) in a controllable voltage range (a controllable voltage range of a direct current power source voltage by which the inverter can controls and drives the motor). Moreover, a comparative voltage value is a minimum voltage value necessary for the driving of the motor at each rotation speed and at each torque command in the controllable voltage range.

In the control configuration, it is judged that the interpolation processing (the interpolation processing by a liner interpolation, a polygonal line interpolation, and so on) is needed based on a comparison result between the comparative voltage value corresponding to the rotation speed and the torque command of the motor, and the detection voltage value obtained by sensing the direct current power source voltage of the inverter, d axis and q axis current commands, or d axis and q axis current command which are interpolated (hereinafter, referred to merely as the interpolated d axis and q axis current commands) are derived and outputted.

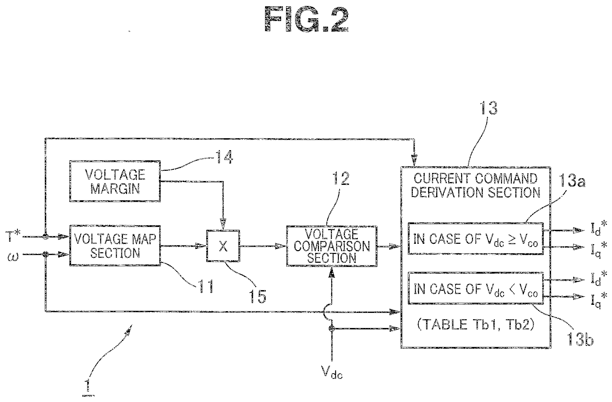

In this control configuration according to this embodiment, for example, even in a case in which the rotation speed and the torque command is relatively low (a case in which the interpolation processing is performed in the conventional control device), when the detection voltage value is equal to or smaller than an upper limit value of the controllable voltage range, and equal to or greater than the comparative voltage value, the d axis and q axis current commands corresponding to the rotation speed and the torque command in the first current command table is derived and outputted (outputted from a derivation function section 13a in FIG. 2 described later).

Moreover, when the detection voltage value is equal to or greater than the lower limit value of the controllable voltage range, and smaller than the comparative voltage value, the interpolated d axis and q axis current commands which are interpolated to correspond to the rotation speed and the torque command, and the detection voltage value can be derived and outputted (outputted from a derivation function section 13b in FIG. 2 described later).

That is, in this control configuration according to this embodiment, it is possible to suppress so as not to perform the interpolation processing having the low necessity, and to improve the overall efficiency.

The control device and the control method for the inverter according to this embodiment can be devised by applying the common general technical knowledge of the various fields (for example, a drive control technology of the inverter, a motor technology, and a power source technology) as long as it is the control configuration in which it is judged that the interpolation processing is needed based on a comparison result between the comparative voltage value corresponding to the rotation speed and the torque command of the motor, and the detection voltage value obtained by sensing the direct current power source voltage of the inverter, in which the interpolation processing is performed, and in which the d axis and the q axis current commands corresponding to the rotation speed and the torque command can be derived, as described above. The following is shown as one example.

<Configuration Example of Control Device of Inverter in This Embodiment>>

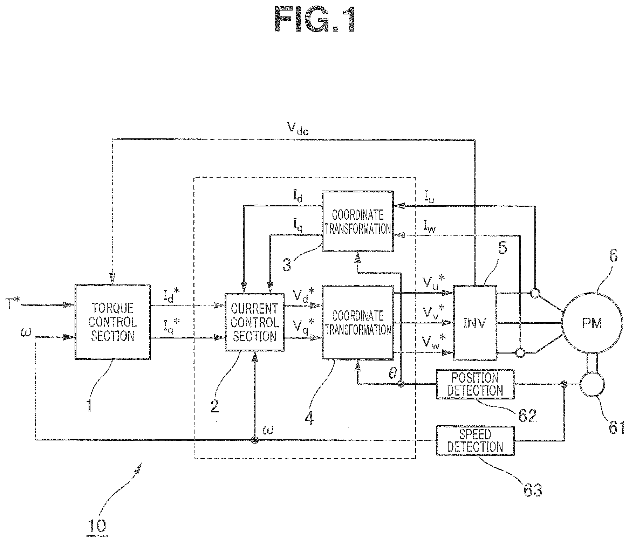

FIG. 1 is a circuit configuration view for explaining a control device 10 for an inverter according to one example of this embodiment. The control device 10 shown in FIG. 1 includes a torque control section 1; and a current control system shown by a broken line block in FIG. 1. The control device 10 includes a control configuration in which the current supplied to the motor 6 is separated into two axes of an exciting current component and a torque current component.

The torque control section 1 includes, for example, a voltage map section 11, a voltage comparison section 12, a current command derivation section 13, and tables Tb1 and Tb2, as shown in FIG. 2 described later. The torque control section 1 is configured to receive, as input parameters, a rotation speed $\omega$, and a torque command $T^*$ of the motor 6, and a detection voltage value $V_{dc}$ obtained by sensing the direct current power source (not shown) voltage of the inverter 5, and to derive a d axis current command (exciting current command) $I_{d^*}$ and a q axis current command (torque current command) flowing in the motor 6.

The torque command $T^*$, the motor 6, and the direct current power source can employ various aspects. These are not limited. For example, in a case in which the control device 10 is applied to an electric vehicle, the torque command $T^*$ corresponds to a value according to an accelerator operation and so on of the electric vehicle. The motor 6 corresponds to a device which can perform the power running and the regeneration. The direct current power source corresponds to a chargeable battery such as an accumulator.

In the current control system shown by the broken line block, the current control section 2 is configured to compare the d axis and q axis current commands $I_{d^*}$, $I_{q^*}$, and the current detection values $I_d$, $I_q$, outputted from a rotation coordinate transformation section 3 described later, and to derive the d axis and q axis voltage commands $V_{d^*}$, $V_{q^*}$, based on the comparison result and the rotation speed $\omega$.

The rotation coordinate transformation section 3 is configured to transform the two phase current detection values $I_u$, $I_w$, of the motor 6, and the V phase current calculation value $I_v$ (= $-I_u - I_w$) based on the magnetic pole phase $\theta$ of the motor 6, and to derive the d, q axis current detection values $I_q$, $I_d$.

An inverse rotational coordinate transformation section 4 is configured to transform the d axis and q axis voltage commands $V_{d^*}$, $V_{q^*}$ based on the magnetic pole phase $\theta$, and to derive the three phase voltage commands $V_{u^*}$, $V_{v^*}$, $V_{w^*}$.

The inverter 5 is configured to perform the output voltage control based on the three phase voltage commands $V_{u^*}$, $V_{v^*}$, $V_{w^*}$ outputted from the inverse rotational coordinate transformation section 4, and to control and drive the motor 6 (control the armature current) so as to attain a desired driving in the motor 6.

A detection section 61 is, for example, an encoder. The detection section 61 is configured to generate a rotor position signal of the motor 6, to derive the magnetic pole phase $\theta$ from this signal by a position detection device 62, and to derive the rotation speed $\omega$ by a speed detection device 63.

<Configuration Example of Torque Control Section>

FIG. 2 shows a configuration example of the torque control section 1. Hereinafter, the members identical to the members shown in FIG. 1 have the identical symbols. The detailed explanations are omitted.

The torque control section 1 includes a voltage map section 11, a voltage comparison section 12, and a current command derivation section 13. The current command derivation section 13 includes predetermined first and second current command tables Tb1 and Tb2.

The first and second current command tables Tb1 and Tb2 store the table data of the d axis and q axis current commands $I_{d^*}$, $I_{q^*}$ by which the overall efficiency is optimized in the first and second arbitrary voltages, and which correspond to the rotation speed $\omega$ and the torque command $T^*$ (that is, the first and second current command tables Tb1 and Tb2 are tables having parameters of the rotation speed $\omega$ and the torque command $T^*$).

For example, the first and second current command tables Tb1 and Tb2 can be formed as follows. The direct current power source voltages of the inverter 5 are set to the first and second arbitrary voltages. The inverter 5 and the motor 6 are previously driven to vary the d axis and q axis current commands $I_{d*}$, $I_{q*}$ corresponding to the rotation speed $\omega$ and the torque command T* inputted to the torque control section 1. The overall efficiency is measured at each timing. The d axis and q axis current commands $I_{d*}$, $I_{q*}$ are searched when the overall efficiency becomes a maximum value × k (k is a margin coefficient, k = substantially 0.9 ~ 1. The d axis and q axis current commands $I_{d*}$, $I_{q*}$ when the overall efficiency is slightly lower than the maximum value may be stored in the tables. In this case, the overall efficiency is considered as being optimized.)

The first and second voltages are set to, respectively, arbitrary voltages to satisfy a relationship equation of the first voltage > the second voltage, for example, in a range of the direct current voltage by which the inverter 5 can control and drive the motor 6 (hereinafter, referred to merely as the controllable voltage range).

For example, between the upper limit voltage $V_{high}$ and the lower limit voltage $V_{low}$ of the controllable voltage range, the first voltage is set to satisfy the following equation (1), and the second voltage is set to the lower limit voltage $V_{low}$. Besides, in the equation (1), m+n=1, 0<m≤1, 0≤n<1.

$$\text{the first voltage} = m \times (\text{the upper limit voltage of the controllable voltage range}) + n \times \text{the lower limit voltage of the controllable voltage range} \tag{1}$$

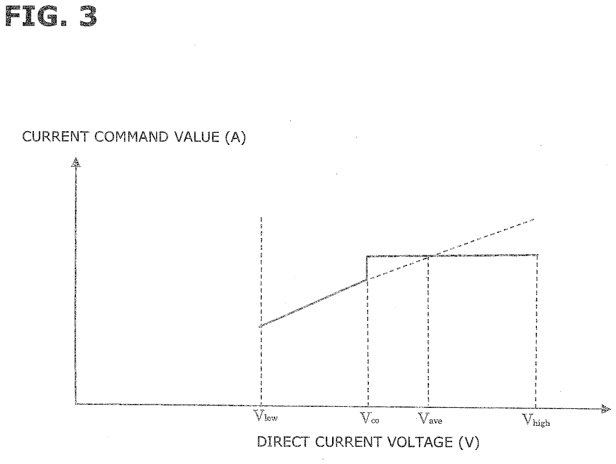

For example, the first voltage satisfying the equation (1) is set to be an average voltage $V_{ave}$ which is an average of the upper limit voltage $V_{high}$ and the lower limit voltage $V_{low}$ (that is, a case of m=n=0.5 in the equation (1)), as shown in FIG. 3 described later.

The voltage map section 11 stores a map data of the comparison voltage value $V_{co}$ corresponding to the rotation speed $\omega$ and the torque command T*. At every timing when the rotation speed $\omega$ and the torque command T* are inputted, the voltage map section 11 is configured to derive and output the corresponding comparative voltage value (to perform the comparative voltage value output process).

The map data can be formed, for example, by previously driving while the rotation speed $\omega$ and the torque command T* are varied in a state in which the direct current power source voltage of the inverter 5 is in the controllable voltage range. In particular, the minimum voltage value necessary for the driving of the motor 6 at each rotation speed $\omega$ and each torque command T* is sensed in the previously driving. These minimum voltage values are set, respectively, to the comparative voltage value $V_{co}$. The map data is formed to correspond to the rotation speed $\omega$ and the torque command T*.

The voltage comparative section 12 is configured to receive the detection voltage value $V_{dc}$ and the comparative voltage value $V_{co}$ outputted from the voltage map section 11, and to derive and output the comparative result of the detection voltage value $V_{dc}$ and the comparative voltage value $V_{co}$ (to perform the voltage comparative process). For example, the comparative voltage value $V_{co}$ inputted from the voltage map section 11 may be multiplied by a voltage margin (a coefficient equal to or greater than 1) considering the transient stability of the control. The torque control section 1 of FIG. 2 includes the storage section 14 configured to store the voltage margin. The torque control section 1 is configured to multiply the comparative voltage value $V_{co}$ by the voltage margin through a multiplier 15.

The current command derivation section 13 includes derivation function sections 13a and 13b. The current command derivation section 13 is configured to receive the comparison result of the voltage comparison section 12, and the detection voltage value $V_{dc}$, to judge whether or not the interpolation processing is needed based on the comparison result, and to derive the d axis and q axis current commands $I_{d*}$, $I_{q*}$ corresponding to the rotation speed $\omega$ and the torque command T* (to perform the command derivation process).

In the judgment of the necessity of the interpolation processing by the current command derivation section 13, for example, in the comparison result of the voltage comparison section 12, when the detection voltage value $V_{dc}$ is equal to or smaller than the upper limit voltage $V_{high}$ of the controllable voltage range, and equal to or greater than the comparison voltage value $V_{co}$ (hereinafter, referred to merely as a case of $V_{dc} \geq V_{co}$), it is judged that the interpolation processing is not needed. Moreover, when the detection voltage value $V_{dc}$ is equal to or greater than the lower limit voltage $V_{low}$ of the controllable voltage range, and smaller than the comparison voltage value $V_{co}$ (hereinafter, referred to merely as a case of $V_{dc} < V_{co}$), it is judged that the interpolation processing is needed.

When it is judged that the interpolation processing is not needed, the derivation function section 13a is operated to derive the d axis and q axis current commands $I_{d*}$, $I_{q*}$ corresponding to the rotation speed $\omega$ and the torque command T* from the first current command table Tb1, and to output the d axis and q axis current commands $I_{d*}$, $I_{q*}$.

When it is judged that the interpolation processing is needed, the derivation function section 13b is operated to extract the d axis and q axis current commands $I_{d*}$, $I_{q*}$ corresponding to the rotation speed $\omega$ and the torque command T* from the first and second current command tables Tb1 and Tb2. Then, the derivation function section 13b is configured to perform the interpolation processing corresponding to the detection voltage value $V_{dc}$ to the extracted d axis and q axis current commands $I_{d*}$, $I_{q*}$, thereby to derive the interpolated d axis and q axis current commands $I_{d*}$, $I_{q*}$, and to output the interpolated d axis and q axis current commands $I_{d*}$, $I_{q*}$ to the current control section 2 shown in FIG. 1.

The interpolation processing and the necessity judgment by the current command derivation section 12 described above can be performed by various methods (for example, the method described in the patent document 1). In particular, these can be performed by following first to third embodiments. Besides, the members identical to the members shown in FIG. 1 and FIG. 2 have the same symbols. The detailed explanations are omitted.

<First Embodiment>

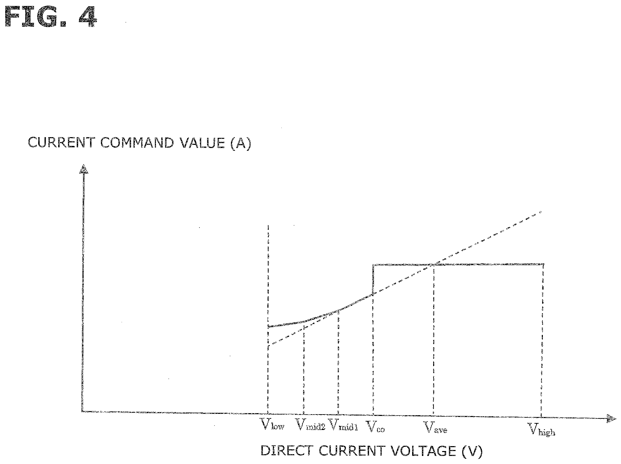

In the first embodiment, the current command derivation section 12 is configured to set the first and second voltages, respectively, to the average voltage $V_{ave}$ and the lower limit voltage $V_{low}$. The first and second current command tables Tb1 and Tb2 are formed. The first embodiment has a current command value characteristic (function characteristic) with respect to the voltage variation as shown in FIG. 3. Besides, in FIG. 3 (and FIG. 4 described later), a solid line in the drawing is the current command value.

In case of $V_{dc} < V_{co}$, the derivation function section 13b is operated to derivate the interpolated d axis and q axis current commands $I_{d*}$, $I_{q*}$ corresponding to the rotation speed $\omega$ and the torque command T*, from the first and second current command tables Tb1 and Tb2, based on the following equations (2) and (3). Besides, $i_{dave}$, $i_{qave}$ are table values of the first current command table Tb1. $i_{dlow}$, $i_{qlow}$ are table values of the second current command table Tb2.

$$I_{d*} = i_{dlow} + (i_{dave} - i_{dlow}) \times (V_{dc} - V_{low}) \div (V_{ave} - V_{low}) \tag{2}$$

$$I_{q*} = i_{qlow} + (i_{qave} - i_{qlow}) \times (V_{dc} - V_{low}) \div (V_{ave} - V_{low})$$
$$\cdots\cdots (3)$$

Besides, the equations (2) and (3) are equations when the first voltage is the average voltage $V_{ave}$. When the first voltage is not the average voltage $V_{ave}$, the first voltage determined in the equation (1) is used in the equations (2) and (3).

In FIG. 3, in case of $V_{dc} \geq V_{co}$, the interpolation processing is not needed. Accordingly, the derivation function section 13a is operated to merely derive the d axis and q axis current commands $I_{d*}$, $I_{q*}$ corresponding to the rotation speed $\omega$ and the torque command T* from the first current command table Tb1.

In this first embodiment, the current command derivation section 13 is configured to perform the interpolation processing, the necessity judgment, and so on. With this, it is possible to perform the interpolation processing having the higher necessity, and to suppress so as not to perform the interpolation processing having lower necessity. Accordingly, it is possible to improve the overall efficiency, relative to the conventional control device.

<Second Embodiment>

In the second embodiment, the current command derivation section 13 includes the first and second current command tables Tb1 and Tb2. Moreover, the current command derivation section 13 includes at least an intermediate current command table between the first and second current command tables Tb1 and Tb2 (hereinafter, referred to merely as the intermediate current command table). Besides, the members identical to the members shown in the first embodiment have the same symbols. The detailed explanations are omitted.

For example, the intermediate current command table can be formed as follows. The direct current power source voltage is set to an arbitrary intermediate voltage which is smaller than the first voltage, and greater than the second voltage (the intermediate voltages different from each other when there are a plurality of the intermediate current command tables). The motor 6 is previously driven while the rotation speed $\omega$ and the torque command T* inputted to the torque control section 1 are varied. The table data is formed so that the d axis and q axis current commands $I_{d*}$, $I_{q*}$ in the previous driving correspond to the rotation speed $\omega$ and the torque command T*.

In this case, the first and second current command tables Tb1 and Tb2 are formed by setting the first and second voltages, respectively, to the average voltages $V_{ave}$, $V_{low}$. First and second intermediate current command tables (not shown) are formed by setting the two intermediate voltages to the first and second intermediate voltages $V_{mid1}$, $V_{mid2}$ (setting to satisfy $V_{mid1} > V_{mid2}$). In this case, for example, the second embodiment has the current command value characteristic (function characteristic) with respect to the voltage variation, as shown in FIG. 4.

The current command derivation section 13 having the current command value characteristic (the function characteristic) shown in FIG. 4 is configured to judge that the interpolation processing is not needed in case of $V_{dc} \geq V_{co}$. The derivation function section 13a is operated. Then, the derivation function section 13a is configured to derivate the d axis and q axis current commands $I_{d*}$, $I_{q*}$ corresponding to the rotation speed $\omega$ and the torque command T*, from the first current command table Tb1, and to output the d axis and q axis current commands $I_{d*}$, $I_{q*}$ to the current control section 2 shown in FIG. 2.

On the other hand, in case of $V_{dc} < V_{co}$, and in a case in which the detection voltage value $V_{dc}$ is between adjacent two of the first voltage (the average voltage $V_{ave}$ in case of FIG. 4), the second voltage (the lower limit voltage $V_{low}$ in case of FIG. 4), the first intermediate voltage $V_{mid1}$, and the second intermediate voltage $V_{mid2}$, it is judged that the interpolation processing by employing the current command tables corresponding to the adjacent two voltages is needed. For example, in case of $V_{dc} < V_{co}$, and in a case in which the detection voltage value $V_{dc}$ is between the first intermediate voltage $V_{mid1}$ and the second intermediate voltage $V_{mid2}$, it is judged that the interpolation processing by employing the first and second intermediate current command tables is needed.

Then, the derivation function section 13b is operated to extract the d axis and q axis current commands $I_{d*}$, $I_{q*}$ corresponding to the rotation speed $\omega$ and the torque command T*, from the first and second current command tables. Then, the derivation function section 13b is configured to perform the interpolation processing corresponding to the detection voltage value $V_{dc}$ to the extracted d axis and q axis current commands $I_{d*}$, $I_{q*}$, thereby to derive the interpolated d axis and q axis current commands $I_{d*}$, $I_{q*}$, and to output the interpolated d axis and q axis current commands $I_{d*}$, $I_{q*}$.

The derivation of the interpolated d axis and q axis current commands $I_{d*}$, $I_{q*}$ are based on the following equations (4) to (9). Besides, $i_{dave}$, $i_{qave}$ are table values of the first current command table Tb1. $i_{dlow}$, $i_{qlow}$ are table values of the second current command table Tb2.

In case of $V_{mid1} \leq V_{dc} < V_{co}$

$$I_{d*} = i_{dmid1} + (i_{dave} - i_{dmid1}) \times (V_{dc} - V_{mid1}) \div (V_{ave} - V_{mid1}) \tag{4}$$

$$I_{q*} = i_{qmid1} + (i_{qave} - i_{qmid1}) \times (V_{dc} - V_{mid1}) \div (V_{ave} - V_{mid1}) \tag{5}$$

In case of $V_{mid2} \leq V_{dc} < V_{mid1}$

$$I_{d*} = i_{dmid2} + (i_{dave} - i_{dmid1}) \times (V_{dc} - V_{mid2}) \div (V_{ave} - V_{mid1}) \tag{6}$$

$$I_{q*} = i_{qmid2} + (i_{qmid1} - i_{qmid2}) \times (V_{dc} - V_{mid2}) \div (V_{mid1} - V_{mid2}) \tag{7}$$

In case of $V_{low} \leq V_{dc} < V_{mid2}$

$$I_{d*} = i_{low} + (i_{dmid2} - i_{dlow}) \times (V_{dc} - V_{low}) \div (V_{mid2} - V_{low}) \tag{8}$$

$$I_{d*} = i_{low} + (i_{qmid2} - i_{qlow}) \times (V_{dc} - V_{low}) \div (V_{mid2} - V_{low}) \tag{9}$$

Besides, the equations (4) to (9) are equations when the first voltage is the average voltage $V_{ave}$. When the first voltage is not the average voltage $V_{ave}$, the first voltage determined in the equation (1) is used in the equations (4) to (9).

In the second embodiment, the current command derivation section 13 performs the interpolation processing, the necessity judgment, and so on. With this, it is possible to attain the operations and effects which are identical to those of the first embodiment. Moreover, it is possible to attain below-described effects. That is, the interpolation processing is performed by the number of the current command tables which is greater than that of the first embodiment. Accordingly, it is possible to perform the driving control minutely corresponding to the variation of the direct current power source voltage of the inverter 5, relative to the first embodiment.

<Third Embodiment>

In the third embodiment, the driving of the motor 6 includes the power running and the regeneration. The direct current power source of the inverter 5 can store the regenerative electric power by the regeneration driving of the motor 6. Moreover, the first voltage is set to satisfy m>n in the equation (1) (that is, the first voltage > the average voltage $V_{ave}$).

In the third embodiment, it is possible to attain the operations and the effects which are identical to those of the first and second embodiments. Moreover, it is possible to attain the following effects. That is, for example, when the regeneration driving of the motor 6 becomes more, the direct current power source is stored by the regenerative electric power, so that the period during which the direct current power source voltage is high becomes long. Accordingly, it is possible to perform the driving control corresponding to the driving condition of the motor 6, for example, relative to the case in which the first voltage is set to the average voltage $V_{ave}$.

## Claims

1.  A control device (10) for an inverter (5) comprising:

    a control section configured to derive d axis and q axis current commands ($I_d{}^*$, $I_q{}^*$) in accordance with a rotation speed ($\omega$) and a torque command (T*) of a motor (6) controlled and driven by an inverter (5), the control section including;

    a voltage map section (11) configured to output a comparative voltage value ($V_{co}$) corresponding to the rotation speed ($\omega$) and the torque command (T*),
    a voltage comparison section (12) configured to compare the comparative voltage value ($V_{co}$) which is inputted from the voltage map section (11), and to which a voltage margin degree is multiplied, and a detection voltage value ($V_{dc}$) obtained by sensing a direct current power source voltage of the inverter (5), and a current command derivation section (13) which has first and second current command tables (Tb1, Tb2), and which is configured to derive the d axis and q axis current commands ($I_d{}^*$, $I_q{}^*$) based on the comparison result of the voltage comparison section (12),
    the first current command table (Tb1) formed by the d axis and q axis current commands ($I_d{}^*$, $I_q{}^*$)by which an overall efficiency is optimized to correspond to the rotation speed ($\omega$) and the torque command (T*) when the motor (6) is driven at a first arbitrary voltage in a controllable voltage range of the direct current power source voltage in which the inverter (5) controls and drives the motor (6),
    the second current command table (Tb2) formed by the d axis and q axis current commands ($I_d{}^*$, $I_q{}^*$) by which the overall efficiency is optimized to correspond to the rotation speed ($\omega$) and the torque command (T*) when the motor (6) is driven at a second arbitrary voltage smaller than the first voltage in the controllable voltage range,
    the comparative voltage value ($V_{co}$) of the voltage map section (11) which is a minimum voltage value necessary for the driving of the motor (6) at each rotation speed ($\omega$) and at each torque command (T*) in the controllable voltage range, and which is stored in the voltage map section (11) to correspond to the rotation speed ($\omega$) and the torque command (T*),
    the current command derivation section (13) being configured to derive the d axis and q axis current commands ($I_d{}^*$, $I_q{}^*$) corresponding to the rotation speed ($\omega$) and the torque command (T*) in the first current command table (Tb1)when the detection voltage value ($V_{dc}$) is equal to or smaller than an upper limit value of the controllable voltage range, and equal to or greater than the comparative voltage value ($V_{co}$) to which the voltage margin degree is multiplied, and to derive interpolated d axis and q axis current commands ($I_d{}^*$, $I_q{}^*$) corresponding to the rotation speed ($\omega$) and the torque command (T*) when the detection voltage value ($V_{dc}$) is equal to or greater than a lower limit value of the controllable voltage range, and smaller than the comparative voltage value ($V_{co}$) to which the voltage margin degree is multiplied, and
    the interpolated d axis and q axis current commands ($I_d{}^*$, $I_q{}^*$) derived by extracting the d axis and q axis current commands ($I_d{}^*$, $I_q{}^*$) corresponding to the rotation speed ($\omega$) and the torque command (T*) in the first and second current command tables (Tb1, Tb2), by performing a linear interpolation processing corresponding to the detection voltage value ($V_{dc}$) to the extracted d axis and q axis current commands ($I_d{}^*$, $I_q{}^*$).

2.  The control device (10) for the inverter (5) as claimed in claim 1, wherein the current command derivation section (13) includes at least an intermediate current command table in addition to the first and second current command tables (Tb1, Tb2);

the intermediate current command table is formed by the d axis and q axis current commands ($I_d^*$, $I_q^*$) by which the overall efficiency is optimized to correspond to the rotation speed ($\omega$) and the torque command ($T^*$) when the motor (6) is driven at an intermediate arbitrary voltage that is smaller than the first voltage, and greater than the second voltage;

the interpolated d axis and q axis current commands ($I_d^*$, $I_q^*$) corresponding to the rotation speed ($\omega$) and the torque command ($T^*$) are derived when the detection voltage value ($V_{dc}$) is equal to or greater than the lower limit value of the controllable voltage range, and smaller than the comparative voltage value ($V_{co}$) to which the voltage margin degree is multiplied, and when the detection voltage value ($V_{dc}$) is between adjacent two of the first voltage, the second voltage, and the intermediate voltage; and

the interpolated d axis and q axis current commands ($I_d^*$, $I_q^*$) are derived by extracting the d axis and q axis current commands ($I_d^*$, $I_q^*$) corresponding to the rotation speed ($\omega$) and the torque command ($T^*$) from the current command tables corresponding to the adjacent two voltages in the first and second current command tables (Tb1, Tb2) and the intermediate current command table, and by performing the interpolation processing corresponding to the detection voltage value ($V_{dc}$) to the extracted d axis and q axis current commands ($I_d^*$, $I_q^*$).

3. The control device (10) for the inverter (5) as claimed in claim 1 or 2, wherein the first voltage is set to satisfy an equation (1), the first voltage = m $\times$ (the upper limit voltage of the controllable voltage range) + n $\times$ the lower limit voltage of the controllable voltage range)     (1)

where in the equation (1), m+n=1, 0<m$\leq$1, 0$\leq$n<1; and
the second voltage is set to the lower limit voltage of the controllable voltage range.

4. The control device (10) for the inverter (5) as claimed in one of claims 1 to 3, wherein the driving of the motor (6) includes a power running and a regeneration;

the direct current power source stores the regenerative electric power by the regeneration of the motor (6); and
m>n is satisfied in the equation (1).

5. A control method for an inverter (5) which is configured to derive d axis and q axis current commands ($I_d^*$, $I_q^*$) corresponding to a rotation speed ($\omega$) and a torque command ($T^*$) of a motor (6) by a control section, and to control and drive the motor (6) based on the derived d axis and q axis current commands ($I_d^*$, $I_q^*$), the control method comprising:
the control section including;

a comparative voltage value ($V_{co}$) output process for outputting a comparative voltage value ($V_{co}$) corresponding to the rotation speed ($\omega$) and the torque command ($T^*$) of the motor (6) by a voltage map section (11) storing the comparative voltage value ($V_{co}$),
a voltage comparison process for comparing the comparative voltage value ($V_{co}$) which is inputted from the voltage map section (11), and to which a voltage margin degree is multiplied, and a detection voltage value (Vdc) obtained by sensing a direct current power source voltage of the inverter (5), by a voltage comparison section (12), and
a command derivation process for deriving the d axis and q axis current commands ($I_d^*$, $I_q^*$) based on the comparison result of the voltage comparison process, by a current command derivation section (13) having first and second current command tables (Tb1, Tb2),
the first current command table (Tb1) formed by the d axis and q axis current commands ($I_d^*$, $I_q^*$) by which an overall efficiency is optimized to correspond to the rotation speed ($\omega$) and the torque command ($T^*$) when the motor (6) is driven at a first arbitrary voltage in a controllable voltage range of the direct current power source voltage in which the inverter (5) controls and drives the motor (6),
the second current command table (Tb2) formed by the d axis and q axis current commands ($I_d^*$, $I_q^*$) by which the overall efficiency is optimized to correspond to the rotation speed ($\omega$) and the torque command ($T^*$) when the motor (6) is driven at a second arbitrary voltage smaller than the first voltage in the controllable voltage range,
the comparative voltage value ($V_{co}$) of the voltage map section (11) which is a minimum voltage value necessary for the driving of the motor (6) at each rotation speed ($\omega$) and at each torque command ($T^*$) in the controllable voltage range, and which is stored in the voltage map section (11) to correspond to the rotation speed ($\omega$) and the torque command ($T^*$),

the current command derivation section (13) being configured to derive the d axis and q axis current commands ($I_d^*$, $I_q^*$) corresponding to the rotation speed ($\omega$) and the torque command ($T^*$) in the first current command table (Tb1) when the detection voltage value ($V_{dc}$) is equal to or smaller than an upper limit value of the controllable voltage range, and equal to or greater than the comparative voltage value ($V_{co}$) to which the voltage margin degree is multiplied, and to which a voltage margin degree is multiplied, and to derive interpolated d axis and q axis current commands ($I_d^*$, $I_q^*$) corresponding to the rotation speed ($\omega$) and the torque command ($T^*$) when the detection voltage value ($V_{dc}$) is equal to or greater than a lower limit value of the controllable voltage range, and smaller than the comparative voltage value ($V_{co}$) to which the voltage margin degree is multiplied, and the interpolated d axis and q axis current commands ($I_d^*$, $I_q^*$) derived by extracting the d axis and q axis current commands ($I_d^*$, $I_q^*$) corresponding to the rotation speed ($\omega$) and the torque command ($T^*$) in the first and second current command tables (Tb1, Tb2), by performing a linear interpolation processing corresponding to the detection voltage value ($V_{dc}$) to the extracted d axis and q axis current commands ($I_d^*$, $I_q^*$).

**Patentansprüche**

1. Steuervorrichtung (10) für einen Umrichter (5), die umfasst:

einen Steuerabschnitt, der so konfiguriert ist, dass er Strombefehle ($I_d^*$, $I_q^*$) für die d-Achse und die q-Achse in Übereinstimmung mit einer Drehzahl ($\omega$) und einem Drehmomentbefehl ($T^*$) eines Motors (6) ableitet, der von einem Umrichter (5) gesteuert und angetrieben wird,
wobei der Steuerabschnitt umfasst;

einen Spannungsabbildungsabschnitt (11), der so konfiguriert ist, dass er einen Vergleichsspannungswert ($V_{co}$) ausgibt, der der Drehzahl (w) und dem Drehmomentbefehl ($T^*$) entspricht,
einen Spannungsvergleichsabschnitt (12), der so konfiguriert ist, dass er den Vergleichsspannungswert ($V_{co}$), der von dem Spannungsabbildungsabschnitt (11) eingegeben wird und mit dem ein Spannungsspielraumausmaß multipliziert wird, und einen Erfassungsspannungswert ($V_{dc}$), der durch Erfassen einer Gleichstromleistungsquellenspannung des Umrichters (5) erhalten wird, vergleicht, und
einen Strombefehlsableitungsabschnitt (13), der erste und zweite Strombefehlstabellen (Tb1, Tb2) aufweist und der so konfiguriert ist, dass er die Strombefehle ($I_d^*$, $I_q^*$) für die d-Achse und die q-Achse auf der Grundlage des Vergleichsergebnisses des Spannungsvergleichsabschnitts (12) ableitet,
wobei die erste Strombefehlstabelle (Tb1) durch die Strombefehle ($I_d^*$, $I_q^*$) für die d-Achse und die q-Achse gebildet wird, durch die ein Gesamtwirkungsgrad so optimiert wird, dass er der Drehzahl (w) und dem Drehmomentbefehl ($T^*$) entspricht, wenn der Motor (6) mit einer ersten beliebigen Spannung in einem steuerbaren Spannungsbereich der Gleichstromleistungsquellenspannung betrieben wird, in welchem der Umrichter (5) den Motor (6) steuert und antreibt,
wobei die zweite Strombefehlstabelle (Tb2) durch die Strombefehle ($I_d^*$, $I_q^*$) für die d-Achse und die q-Achse gebildet wird, durch die der Gesamtwirkungsgrad so optimiert wird, dass er der Drehzahl (w) und dem Drehmomentbefehl ($T^*$) entspricht, wenn der Motor (6) mit einer zweiten beliebigen Spannung betrieben wird, die kleiner ist als die erste Spannung in dem steuerbaren Spannungsbereich,
wobei der Vergleichsspannungswert ($V_{co}$) des Spannungsabbildungsabschnitts (11), der ein minimaler Spannungswert ist, der für das Antreiben des Motors (6) bei jeder Drehzahl (w) und bei jedem Drehmomentbefehl ($T^*$) in dem steuerbaren Spannungsbereich erforderlich ist, und der in dem Spannungsabbildungsabschnitt (11) gespeichert ist, um der Drehzahl (w) und dem Drehmomentbefehl ($T^*$) zu entsprechen,
wobei der Strombefehlsableitungsabschnitt (13) so konfiguriert ist, dass er die Strombefehle ($I_d^*$, $I_q^*$) für die d-Achse und die q-Achse entsprechend der Drehzahl (w) und dem Drehmomentbefehl ($T^*$) in der ersten Strombefehlstabelle (Tb1) ableitet, wenn der Erfassungsspannungswert ($V_{dc}$) kleiner oder gleich einem oberen Grenzwert des steuerbaren Spannungsbereichs und größer oder gleich dem Vergleichsspannungswert ($V_{co}$) ist, mit dem das Spannungsspielraumausmaß multipliziert wird, und dass er interpolierte Strombefehle ($I_d^*$, $I_q^*$) für die d-Achse und die q-Achse ableitet, die der Drehzahl (w) und dem Drehmomentbefehl ($T^*$) entsprechen, wenn der Erfassungsspannungswert ($V_{dc}$) größer oder gleich einem unteren Grenzwert des steuerbaren Spannungsbereichs und kleiner als der Vergleichsspannungswert ($V_{co}$) ist, mit dem das Spannungsspielraumausmaß multipliziert wird, und
wobei die interpolierten Strombefehle ($I_d^*$, $I_q^*$) für die d-Achse und die q-Achse durch Extrahieren der Strombefehle ($I_d^*$, $I_q^*$) für die d-Achse und die q-Achse, die der Drehzahl (w) und dem Drehmomentbefehl ($T^*$) entsprechen, in den ersten und zweiten Strombefehlstabellen (Tb1, Tb2) abgeleitet werden, indem eine lineare Interpolationsverarbeitung durchgeführt wird, die dem Erfassungsspannungswert ($V_{dc}$) für die extrahierten Strombefehle ($I_d*$, $I_q*$) für die d-Achse und die q-Achse entspricht.

2. Steuervorrichtung (10) für den Umrichter (5) nach Anspruch 1, wobei der Strombefehlsableitungsabschnitt (13) zusätzlich zu den ersten und zweiten Strombefehlstabellen (Tb1, Tb2) mindestens eine Zwischenstrombefehlstabelle enthält;

wobei die Zwischenstrombefehlstabelle durch die Strombefehle ($I_d*$, $I_q*$) für die d-Achse und die q-Achse gebildet wird, durch die der Gesamtwirkungsgrad so optimiert wird, dass er der Drehzahl (w) und dem Drehmomentbefehl (T*) entspricht, wenn der Motor (6) mit einer beliebigen Zwischenspannung angetrieben wird, die kleiner als die erste Spannung und größer als die zweite Spannung ist;
wobei die interpolierten Strombefehle ($I_d*$, $I_q*$) für die d-Achse und die q-Achse, die der Drehzahl (w) und dem Drehmomentbefehl (T*) entsprechen, abgeleitet werden, wenn der Erfassungsspannungswert ($V_{dc}$) größer oder gleich dem unteren Grenzwert des steuerbaren Spannungsbereichs und kleiner als der Vergleichsspannungswert ($V_{co}$) ist, mit dem das Spannungsspielraumausmaß multipliziert wird, und wenn der Erfassungsspannungswert ($V_{dc}$) zwischen zwei benachbarten der ersten Spannung, der zweiten Spannung und der Zwischenspannung liegt; und
wobei die interpolierten Strombefehle ($I_d*$, $I_q*$) für die d-Achse und die q-Achse abgeleitet werden, indem die Strombefehle ($I_d*$, $I_q*$) für die d-Achse und die q-Achse, die der Drehzahl (w) und dem Drehmomentbefehl (T*) entsprechen, aus den Strombefehlstabellen extrahiert werden, die den beiden benachbarten Spannungen in den ersten und zweiten Strombefehlstabellen (Tb1, Tb2) und der Zwischenstrombefehlstabelle entsprechen, und indem die Interpolationsverarbeitung durchgeführt wird, die dem Erfassungsspannungswert ($V_{dc}$) für die extrahierten Strombefehle ($I_d*$, $I_q*$) für die d-Achse und die q-Achse entspricht.

3. Steuervorrichtung (10) für den Umrichter (5) nach Anspruch 1 oder 2, wobei die erste Spannung so eingestellt wird, dass sie eine Gleichung (1) erfüllt, bei der

$$\text{die erste Spannung} = m \times (\text{die obere Grenzspannung des steuerbaren Spannungsbereichs}) + n \times \text{die untere Grenzspannung des steuerbaren Spannungsbereichs)} \qquad (1)$$

wobei in Gleichung (1) m+n=1, $0<m\leq 1$, $0\leq n<1$; und
die zweite Spannung auf die untere Grenzspannung des steuerbaren Spannungsbereichs eingestellt wird.

4. Steuervorrichtung (10) für den Umrichter (5) nach einem der Ansprüche 1 bis 3, wobei das Antreiben des Motors (6) einen Leistungsbetrieb und eine Regeneration umfasst;

wobei die Gleichstromleistungsquelle die regenerative elektrische Energie durch die Regeneration des Motors (6) speichert; und
m>n in der Gleichung (1) erfüllt ist.

5. Steuerverfahren für einen Umrichter (5), das so konfiguriert ist, dass es Strombefehle ($I_d*$, $I_q*$) für die d-Achse und die q-Achse entsprechend einer Drehzahl ($\omega$) und einem Drehmomentbefehl (T*) eines Motors (6) durch einen Steuerabschnitt ableitet und den Motor (6) auf der Grundlage der abgeleiteten Strombefehle ($I_d*$, $I_q*$) für die d-Achse und die q-Achse steuert und antreibt, wobei das Steuerverfahren umfasst:
den Steuerabschnitt, der umfasst;

einen Ausgabeprozess für einen Vergleichsspannungswert ($V_{co}$) zum Ausgeben eines Vergleichsspannungswertes ($V_{co}$), der der Drehzahl (w) und dem Drehmomentbefehl (T*) des Motors (6) entspricht, durch einen Spannungsabbildungsabschnitt (11), der den Vergleichsspannungswert ($V_{co}$) speichert,
einen Spannungsvergleichsprozess zum Vergleichen des Vergleichsspannungswerts ($V_{co}$), der von dem Spannungsabbildungsabschnitt (11) eingegeben wird und mit dem ein Spannungsspielraumausmaß multipliziert wird, mit einem Erfassungsspannungswert (Vdc), der durch Erfassen einer Gleichstromleistungsquellenspannung des Umrichters (5) erhalten wird, durch einen Spannungsvergleichsabschnitt (12), und
einen Befehlsableitungsprozess zum Ableiten der Strombefehle ($I_d*$, $I_q*$) für die d-Achse und die q-Achse auf der Grundlage des Vergleichsergebnisses des Spannungsvergleichsprozesses durch einen Strombefehlsableitungsabschnitt (13) mit ersten und zweiten Strombefehlstabellen (Tb1, Tb2),
wobei die erste Strombefehlstabelle (Tb1) durch die Strombefehle ($I_d*$, $I_q*$) für die d-Achse und die q-Achse gebildet wird, durch die ein Gesamtwirkungsgrad so optimiert wird, dass er der Drehzahl (w) und dem Drehmomentbefehl (T*) entspricht, wenn der Motor (6) mit einer ersten beliebigen Spannung in einem steuerbaren Spannungsbereich der Gleichstromleistungsquellenspannung betrieben wird, in dem der Umrichter (5) den Motor (6) steuert und antreibt,

wobei die zweite Strombefehlstabelle (Tb2) durch die Strombefehle ($I_d$*, $I_q$*) für die d-Achse und die q-Achse gebildet wird, durch die der Gesamtwirkungsgrad so optimiert wird, dass er der Drehzahl (w) und dem Drehmomentbefehl (T*) entspricht, wenn der Motor (6) mit einer zweiten beliebigen Spannung betrieben wird, die kleiner ist als die erste Spannung in dem steuerbaren Spannungsbereich,

wobei der Vergleichsspannungswert ($V_{co}$) des Spannungsabbildungsabschnitts (11), der ein minimaler Spannungswert ist, der für das Antreiben des Motors (6) bei jeder Drehzahl (w) und bei jedem Drehmomentbefehl (T*) in dem steuerbaren Spannungsbereich erforderlich ist, und der in dem Spannungsabbildungsabschnitt (11) gespeichert wird, um der Drehzahl (w) und dem Drehmomentbefehl (T*) zu entsprechen,

wobei der Strombefehlsableitungsabschnitt (13) so konfiguriert ist, dass er die Strombefehle ($I_d$*, $I_q$*) für die d-Achse und die q-Achse, die der Drehzahl (w) und dem Drehmomentbefehl (T*) entsprechen, in der ersten Strombefehlstabelle (Tb1) ableitet, wenn der Erfassungsspannungswert ($V_{dc}$) kleiner oder gleich einem oberen Grenzwert des steuerbaren Spannungsbereichs und größer oder gleich dem Vergleichsspannungswert ($V_{co}$) ist, mit dem das Spannungsspielraumausmaß multipliziert wird, und mit dem ein Spannungsspielraumausmaß multipliziert wird, und um interpolierte Strombefehle ($I_d$*, $I_q$*) für die d-Achse und die q-Achse abzuleiten, die der Drehzahl (w) und dem Drehmomentbefehl (T*) entsprechen, wenn der Erfassungsspannungswert ($V_{dc}$) größer oder gleich einem unteren Grenzwert des steuerbaren Spannungsbereichs und kleiner als der Vergleichsspannungswert ($V_{co}$) ist, mit dem das Spannungsspielraumausmaß multipliziert wird, und

wobei die interpolierten Strombefehle ($I_d$*, $I_q$*) für die d-Achse und die q-Achse durch Extraktion der Strombefehle ($I_d$*, $I_q$*) für die d-Achse und die q-Achse entsprechend der Drehzahl (w) und dem Drehmomentbefehl (T*) in den ersten und zweiten Strombefehlstabellen (Tb1, Tb2) abgeleitet werden, indem eine lineare Interpolationsverarbeitung entsprechend dem Erfassungsspannungswert ($V_{dc}$) für die extrahierten Strombefehle ($I_d$*, $I_q$*) für die d-Achse und die q-Achse durchgeführt wird.

## Revendications

1. Dispositif de commande (10) pour un onduleur (5) comprenant :

une section de commande configurée pour dériver des consignes de courant d'axe d et d'axe q (Id*, Iq*) en fonction d'une vitesse de rotation ($\omega$) et d'une consigne de couple (T*) d'un moteur (6) commandé et entraîné par un onduleur (5),
la section de commande incluant :

une section de cartographie de tension (11) configurée pour délivrer une valeur de tension comparative (Vco) correspondant à la vitesse de rotation ($\omega$) et à la consigne de couple (T*),
une section de comparaison de tensions (12) configurée pour comparer la valeur de tension comparative (Vco) entrée à partir de la section de cartographie de tension (11), et à laquelle un degré de marge de tension est multiplié, et une valeur de tension de détection (Vdc) obtenue en détectant une tension de source d'alimentation en courant continu de l'onduleur (5), et
une section de dérivation de consignes de courant (13) qui présente des première et deuxième tables de consignes de courant (Tb1, Tb2) et qui est configurée pour dériver les consignes de courant d'axe d et d'axe q (Id*, Iq*) sur la base du résultat de comparaison de la section de comparaison de tensions (12),
la première table de consignes de courant (Tb1) étant formée par les consignes de courant d'axe d et d'axe q (Id*, Iq*) par lesquelles un rendement global est optimisé pour correspondre à la vitesse de rotation ($\omega$) et à la consigne de couple (T*) lorsque le moteur (6) est entraîné à une première tension arbitraire dans une plage de tension commandable de la tension de source d'alimentation en courant continu, dans laquelle l'onduleur (5) commande et entraîne le moteur (6),
la deuxième table de consignes de courant (Tb2) étant formée par les consignes de courant d'axe d et d'axe q (Id*, Iq*) par lesquelles le rendement global est optimisé pour correspondre à la vitesse de rotation ($\omega$) et à la consigne de couple (T*) lorsque le moteur (6) est entraîné à une deuxième tension arbitraire inférieure à la première tension dans la plage de tension commandable,
la valeur de tension comparative (Vco) de la section de cartographie de tension (11), qui est une valeur de tension minimale nécessaire pour l'entraînement du moteur (6) à chaque vitesse de rotation ($\omega$) et à chaque consigne de couple (T*) dans la plage de tension commandable, et qui est stockée dans la section de cartographie de tension (11) pour correspondre à la vitesse de rotation ($\omega$) et à la consigne de couple (T*),

la section de dérivation de consignes de courant (13) étant configurée pour dériver les consignes de courant d'axe d et d'axe q (Id*, Iq*) correspondant à la vitesse de rotation (ω) et à la consigne de couple (T*) dans la première table de consignes de courant (Tb1) lorsque la valeur de tension de détection (Vdc) est égale ou inférieure à une valeur limite supérieure de la plage de tension commandable, et égale ou supérieure à la valeur de tension comparative (Vco) à laquelle le degré de marge de tension est multiplié, et pour dériver des consignes de courant d'axe d et d'axe q interpolées (Id*, Iq*) correspondant à la vitesse de rotation (ω) et à la consigne de couple (T*) lorsque la valeur de tension de détection (Vdc) est égale ou supérieure à une valeur limite inférieure de la plage de tension commandable, et inférieure à la valeur de tension comparative (Vco) à laquelle le degré de marge de tension est multiplié, et

les consignes de courant d'axe d et d'axe q interpolées (Id*, Iq*) étant dérivées en extrayant les consignes de courant d'axe d et d'axe q (Id*, Iq*) correspondant à la vitesse de rotation (ω) et à la consigne de couple (T*) dans les première et deuxième tables de consignes de courant (Tb1, Tb2), et en effectuant un traitement d'interpolation linéaire correspondant à la valeur de tension de détection (Vdc) sur les consignes de courant d'axe d et d'axe q (Id*, Iq*) extraites.

2. Dispositif de commande (10) pour l'onduleur (5) selon la revendication 1, dans lequel la section de dérivation de consignes de courant (13) inclut au moins une table de consignes de courant intermédiaire en plus des première et deuxième tables de consignes de courant (Tb1, Tb2) ;

la table de consignes de courant intermédiaire est formée par les consignes de courant d'axe d et d'axe q (Id*, Iq*) par lesquelles le rendement global est optimisé pour correspondre à la vitesse de rotation (ω) et à la consigne de couple (T*) lorsque le moteur (6) est entraîné à une tension arbitraire intermédiaire qui est inférieure à la première tension et supérieure à la deuxième tension ;

les consignes de courant d'axe d et d'axe q interpolées (Id*, Iq*) correspondant à la vitesse de rotation (ω) et à la consigne de couple (T*) sont dérivées lorsque la valeur de tension de détection (Vdc) est égale ou supérieure à la valeur limite inférieure de la plage de tension commandable, et inférieure à la valeur de tension comparative (Vco) à laquelle le degré de marge de tension est multiplié, et lorsque la valeur de tension de détection (Vdc) est comprise entre deux tensions adjacentes parmi la première tension, la deuxième tension et la tension intermédiaire ; et

les consignes de courant d'axe d et d'axe q interpolées (Id*, Iq*) sont dérivées en extrayant les consignes de courant d'axe d et d'axe q (Id*, Iq*) correspondant à la vitesse de rotation (ω) et à la consigne de couple (T*) des tables de consignes de courant correspondant aux deux tensions adjacentes dans les première et deuxième tables de consignes de courant (Tb1, Tb2) et la table de consignes de courant intermédiaire, et en effectuant le traitement d'interpolation correspondant à la valeur de tension de détection (Vdc) sur les consignes de courant d'axe d et d'axe q (Id*, Iq*) extraites.

3. Dispositif de commande (10) pour l'onduleur (5) selon la revendication 1 ou la revendication 2, dans lequel la première tension est fixée pour satisfaire une équation (1), la première tension = m × (la tension limite supérieure de la plage de tension commandable) + n × la tension limite inférieure de la plage de tension commandable)   (1)

où, dans l'équation (1), m + n = 1, 0 < m ≤ 1, 0 ≤ n < 1 ; et
la deuxième tension est fixée à la tension limite inférieure de la plage de tension commandable.

4. Dispositif de commande (10) pour l'onduleur (5) selon l'une des revendications 1 à 3, dans lequel l'entraînement du moteur (6) inclut un fonctionnement alimenté et une régénération ;

la source d'alimentation en courant continu stocke l'énergie électrique régénérative par la régénération du moteur (6) ; et
m > n est satisfait dans l'équation (1).

5. Procédé de commande pour un onduleur (5) configuré pour dériver des consignes de courant d'axe d et d'axe q (Id*, Iq*) correspondant à une vitesse de rotation (ω) et à une consigne de couple (T*) d'un moteur (6) par une section de commande, et pour commander et entraîner le moteur (6) sur la base des consignes de courant d'axe d et d'axe q dérivées (Id*, Iq*), le procédé de commande consistant à :
la section de commande incluant :

un processus de sortie de valeur de tension comparative (Vco) pour délivrer une valeur de tension comparative (Vco) correspondant à la vitesse de rotation (ω) et à la consigne de couple (T*) du moteur (6) par une section de cartographie de tension (11) stockant la valeur de tension comparative (Vco),

un processus de comparaison de tensions pour comparer la valeur de tension comparative (Vco) qui est entrée à partir de la section de cartographie de tension (11), et à laquelle un degré de marge de tension est multiplié, et une valeur de tension de détection (Vdc) obtenue en détectant d'une tension de source d'alimentation en courant continu de l'onduleur (5), par une section de comparaison de tensions (12), et

un processus de dérivation de consignes pour dériver les consignes de courant d'axe d et d'axe q (Id*, Iq*) sur la base du résultat de comparaison du processus de comparaison de tensions, par une section de dérivation de consignes de courant (13) présentant une première et une deuxième table de consignes de courant (Tb1, Tb2),

la première table de consignes de courant (Tb1) étant formée par les consignes de courant d'axe d et d'axe q (Id*, Iq*) par lesquelles un rendement global est optimisé pour correspondre à la vitesse de rotation (ω) et à la consigne de couple (T*) lorsque le moteur (6) est entraîné à une première tension arbitraire dans une plage de tension commandable de la tension de source d'alimentation en courant continu, dans laquelle l'onduleur (5) commande et entraîne le moteur (6),

la deuxième table de consignes de courant (Tb2) étant formée par les consignes de courant d'axe d et d'axe q (Id*, Iq*) par lesquelles le rendement global est optimisé pour correspondre à la vitesse de rotation (ω) et à la consigne de couple (T*) lorsque le moteur (6) est entraîné à une deuxième tension arbitraire inférieure à la première tension dans la plage de tension commandable,

la valeur de tension comparative (Vco) de la section de cartographie de tension (11), qui est une valeur de tension minimale nécessaire pour l'entraînement du moteur (6) à chaque vitesse de rotation (ω) et à chaque consigne de couple (T*) dans la plage de tension commandable, et qui est stockée dans la section de cartographie de tension (11) pour correspondre à la vitesse de rotation (ω) et à la consigne de couple (T*),

la section de dérivation de consignes de courant (13) étant configurée pour dériver les consignes de courant d'axe d et d'axe q (Id*, Iq*) correspondant à la vitesse de rotation (ω) et à la consigne de couple (T*) dans la première table de consignes de courant (Tb1) lorsque la valeur de tension de détection (Vdc) est égale ou inférieure à une valeur limite supérieure de la plage de tension commandable, et égale ou supérieure à la valeur de tension comparative (Vco) à laquelle le degré de marge de tension est multiplié, et pour dériver des consignes de courant d'axe d et d'axe q interpolées (Id*, Iq*) correspondant à la vitesse de rotation (ω) et à la consigne de couple (T*) lorsque la valeur de tension de détection (Vdc) est égale ou supérieure à une valeur limite inférieure de la plage de tension commandable, et inférieure à la valeur de tension comparative (Vco) à laquelle le degré de marge de tension est multiplié, et

les consignes de courant d'axe d et d'axe q interpolées (Id*, Iq*) étant dérivées en extrayant les consignes de courant d'axe d et d'axe q (Id*, Iq*) correspondant à la vitesse de rotation (ω) et à la consigne de couple (T*) dans les première et deuxième tables de consignes de courant (Tb1, Tb2), et en effectuant un traitement d'interpolation linéaire correspondant à la valeur de tension de détection (Vdc) sur les consignes de courant d'axe d et d'axe q (Id*, Iq*) extraites.

# FIG.1

# FIG.2

FIG. 3

CURRENT COMMAND VALUE (A)

DIRECT CURRENT VOLTAGE (V)

$V_{low}$    $V_{co}$    $V_{ave}$    $V_{high}$

FIG. 4

CURRENT COMMAND VALUE (A)

$V_{low}$  $V_{mid2}$ $V_{mid1}$  $V_{co}$  $V_{ave}$  $V_{high}$

DIRECT CURRENT VOLTAGE (V)

**REFERENCES CITED IN THE DESCRIPTION**

**Patent documents cited in the description**

- JP 2004080896 A
- US 20180367076 A1